# EUROPÄISCHE PATENTANMELDUNG

(11) **EP 0 798 066 A1**
(43) Veröffentlichungstag der Anmeldung: **01.10.1997**
(21) Anmeldenummer: 97105318.6
(22) Anmeldetag: 28.03.1997
(51) Int. Cl.: B23C 3/12

(54) **Kleinfräsenvorsatz**

(30) Priorität: 29.03.1996 DE 19612482
(71) Anmelder: KARL M. REICH MASCHINENFABRIK GmbH, 72622 Nürtingen (DE)
(72) Erfinder: Arlart, Gerhard, 72297 Seewald (DE)
(74) Vertreter: Patentanwälte Bartels und Partner

(57) **Zusammenfassung**

Kleinfräsenvorsatz zur Abrundung der Kanten und Ecken von Werkstücken mit zwei rechtwinklig zueinander und quer zur Fräswerkzeugachse (9) angeordneten Anschlagflächen (2, 3). In der Ecke (4) zwischen den Anschlagflächen (2, 3) verläuft eine symmetrisch zu den Anschlagflächen angeordnete Vertiefung. Außerdem ist eine den Fräskopf (7) aufnehmende Ausnehmung (6) im Bereich der Vertiefung (5) vorgesehen, derart, daß das Messer (8) des Fräskopfes in den Bereich der Vertiefung und den in Verlängerung der Anschlagflächen durch die Vertiefung entstandenen Eckbereiche gelangt. Quer zur Anschlagfläche ist außerdem ein Anschlag (10, 11) zur Bearbeitung der Werkstücke vorgesehen, die miteinander fluchtend und mit der Fräswerkzeugachse in einer Ebene liegen.

## Beschreibung

Die vorliegende Erfindung betrifft einen Kleinfräsenvorsatz zur Abrundung der Kanten und Ecken von Werkstücken gemäß dem Oberbegriff des Hauptanspruchs.

Bei dem Verputzen von Werkstücken aus Holzwerkstoffen, Holz oder auch Kunststoff stellt es bei der üblichen Handfräsen, die sowohl fest montiert als auch mobil eingesetzt werden, immer ein Problem dar, eine gleichmäßige und einheitliche Abrundung der Kanten zu erreichen. Insbesondere bei den rechtwinkligen Ecken stellt der Übergang von der einen Kante auf die andere bei diesen Handgeräten sich als ein schwieriges Unterfangen dar, eine gleichmäßige Abrundung zu erreichen.

Der vorliegenden Erfindung liegt daher die Aufgabe zugrunde, einen Fräsvorsatz für derartige Handgeräte vorzuschlagen, mit dem das Verputzen wesentlich erleichtert wird.

Diese Aufgabe wird erfindungsgemäß durch einen Kleinfräsenvorsatz mit den Merkmalen des Hauptanspruchs gelöst. Weitere vorteilhafte Ausgestaltungen sind den Unteransprüchen zu entnehmen.

Der Kleinfräsenvorsatz weist danach zwei rechtwinklig zueinander und quer zur Fräswerkzeugachse angeordnete Anschlagflächen auf. In der Ecke zwischen den Anschlagflächen verläuft eine symmetrisch zu den Anschlagflächen angeordnete Vertiefung, die dem Abtransport der Späne beim Fräsen dient. Da der Kleinfräsenvorsatz axial von oben auf das Fräswerkzeug aufgesetzt wird, weist der Vorsatz eine den Fräskopf aufnehmende Ausnehmung auf, die im Bereich der Vertiefung derart angeordnet ist, daß das Messer des Fräskopfes in den Bereich der Vertiefung und in den Eckbereich der Anschlagflächen gelangt, in dem sich die Vertiefung befindet. Damit wird gewährleistet, daß die gewünschte Abrundung eines Werkstückes, das an den beiden Anschlagflächen anliegt, entsprechend dem Radius des Fräskopfes erfolgt. Um eine einwandfreie Abrundung der Ecken zu erreichen, ist darüber hinaus quer zu jeder Anschlagfläche ein Anschlag vorgesehen, die miteinander fluchten und mit der Fräswerkzeugachse in einer Ebene liegen. Dieser Anschlag dient dazu, entweder das Werkzeug oder das Werkstück bei der Bearbeitung um diesen Anschlag zu drehen, wenn die Ecke des Werkstückes erreicht ist, so daß die an der ersten Seite des Werkstückes anliegende Anschlagfläche nach dem Kippen an der zweiten Seite des Werkstückes anliegt. Die zweite Anschlagfläche bleibt weiterhin auf der Oberseite des Werkstückes, jedoch nach dem Kippen um 90° gedreht. Bei diesem Kippvorgang erfolgt eine saubere gleichmäßige Abrundung der Ecken. Als Anschlag kann eine entsprechen ausgestaltete Kerbe oder andere geeignete Einrichtungen dienen.

Gemäß einer bevorzugten Ausführungsform ist der Anschlag als quer über die jeweilige Anschlagfläche verlaufende Kerbe ausgebildet, wobei vorzugsweise der Boden der Kerbe rechtwinklig ist, um der Form des Werkstücks Rechnung zu tragen. Die Kerbe kann auch aus einem anderen Material z. B. Metall als die Anschlagfläche und als Einsatzteil ausgebildet sein.

Vorteilhafterweise ist die Kerbe maximal 1 mm tief und maximal 2 mm breit, um zu vermeiden, daß beim Kippvorgang ein zu starkes Anfräsen und Abrunden des Werkstückes erfolgt. Als Fräswerkzeuge können Fräser mit Radien ab 2 mm verwendet werden. In einer weiteren Ausbildung kann zur besseren Handhabung auch für Ungeübte der Boden einer Kerbe mittels einer geeigneten Einrichtung geringfügig angehoben werden, so daß das Werkstück beim Abrunden der Ecke etwas von dem Fräskopf entfernt wird.

Zweckmäßigerweise sind die Anschlagflächen aus einem die Werkstückoberfläche schonenden Material ausgebildet. Dazu können sie entweder vollständig aus Holz oder einem Holzwerkstoff als auch einem beschichteten Metall bestehen.

Bevorzugt wird die Anschlagfläche, deren Flächenvektor senkrecht zur Fräserwerkzeugachse steht, an der Kante des Werkstücks geführt, während die andere Anschlagfläche bevorzugt auf der Werkstückoberfläche aufliegt.

Gemäß einer weiteren vorteilhaften Ausgestaltung sind für die Abrundung von Kanten bei Werkstücken mit einer bogenförmigen Ausgestaltung, wie beispielsweise ovale Tischplatte usw., auf eine Anschlagfläche, vorzugsweise auf der Anschlagfläche deren Flächenvektor senkrecht zur Fräserwerkzeugachse steht, zwei in der Ebene der Anschlagfläche verschiebbare und in der jeweiligen Position arretierbare Keile angeordnet. Diese Keile sorgen dafür, daß der Kleinfräsenvorsatz definiert an mindestens zwei Punkten an der Kante anliegt und auf diese Art und Weise ein sauberes Arbeiten gewährleistet ist. Durch die Verschiebung der Keile relativ zueinander ist die Anpassung an verschiedene Radien möglich. Die Halterung der Keile erfolgt in einer dem Fachmann geläufigen Art und Weise, beispielsweise durch Flügelschrauben oder andere Steckverbindungen.

Um auch den Kleinfräsenvorsatz bei Innenradien einsetzen zu können, ist bei einer anderen bevorzugten Ausführungsform eine Anschlagfläche, vorzugsweise die Anschlagfläche deren Flächenvektor senkrecht zur Fräserwerkzeugachse steht, als Stegfläche im Bereich der Fräserwerkzeugachse ausgebildet. Damit wird erreicht, daß mit einer sehr schmalen Anschlagfläche, deren Breite vorteilhafterweise 4 bis 10 mm beträgt, der Vorsatz bei Innenradien eingesetzt werden kann, um auch dort eine saubere Kantenabrundung zu erreichen. Die Stegfläche kann bei dem Kleinfräsenvorsatz entweder durch Austausch der entsprechenden Anschlagflächen oder durch eine dreigeteilte Anschlagfläche mit zwei äußeren abnehmbaren Teilen realisiert werden.

Nachfolgend wird die Erfindung anhand eines Ausführungsbeispiels in Verbindung mit den begleitenden Zeichnungen näher erläutert. Es stellen dar:
- Figur 1: eine schematische Querschnittdarstellung des Aufsatzes mit dem Fräswerkzeug;
- Figur 2: eine Frontansicht des Kleinfräsenvorsatzes und
- Figur 3: eine Detailvergrößerung aus Figur 2.
- Figur 4: eine Ansicht entsprechend Figur 2 mit Keilen für bogenförmige Werkzeugkanten und
- Figur 5: eine Ansicht gemäß Figur 3 mit einer Stegfläche als Anschlagfläche.

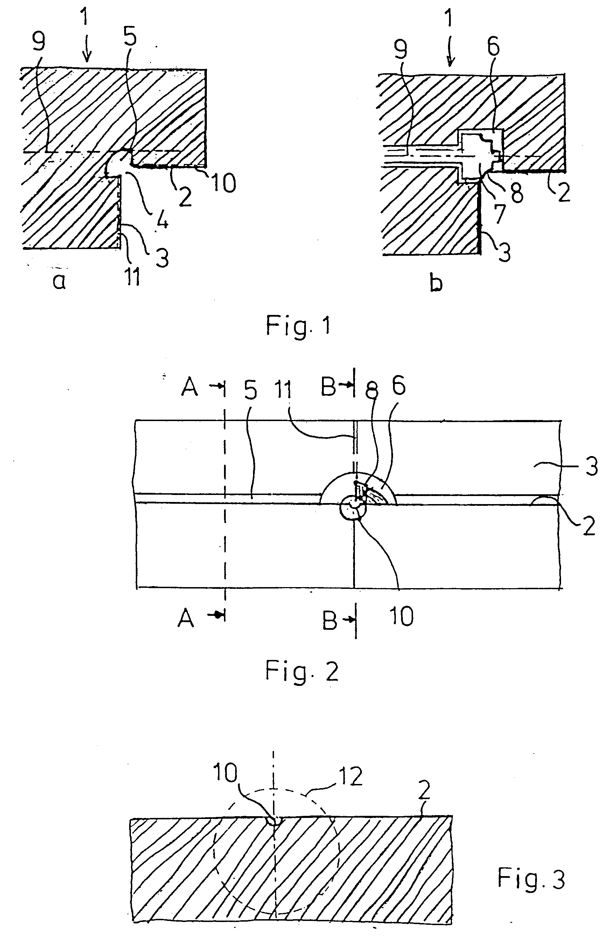

Figur 1a zeigt einen Schnitt entlang der Linie A-A gemäß Figur 2 und Figur 1b einen Schnitt entlang der Linie B-B gemäß der Figur 2. Der Kleinfräsenvorsatz 1 weist zwei rechtwinklig zueinander angeordnete Anschlagflächen 2 und 3 auf, wobei in der Ecke 4 eine Vertiefung 5, die symmetrisch zu den Anschlagflächen 2, 3 angeordnet ist, befindet. Figur 1b zeigt eine Ausnehmung 6 für den Fräskopf 7, die in den Bereich der Ecke 4 hineinragt, damit die Messer 8 des Fräskopfes 7 ebenfalls in den Bereich der Ecke 4 eingreifen können, um dort die Abrundung des Werkstückes zu bewirken. Die Anschlagflächen 2 und 3 sind quer zu der Fräswerkzeugachse 9 angeordnet. Gestrichelt sind Kerben 10, 11 für die Abrundung der Ecken des Werkstücks dargestellt.

Figur 2 zeigt die schematische Frontansicht des Kleinfräsvorsatzes mit den Anschlagflächen 2, 3, der Vertiefung 5 und der den Fräskopf 7 aufnehmenden Ausnehmung 6. Fräswerkzeugachse 9 und die quer zu den Anschlagflächen 2, 3 verlaufenden und miteinander fluchtenden Kerben 10, 11 bilden den Anschlag, um den das Werkstück bzw. der Kleinfräsenvorsatz gekippt wird, um die Rundung der Ecke zu realisieren.

Figur 3 zeigt eine vergrößerte Darstellung der in Figur 2 gekennzeichneten Einheit X. Es zeigt den Messerflugkreis 12 des Fräskopfes sowie die Anschlagfläche 2 mit der Kerbe 10. In diesem Ausführungsbeispiel ist die Kerbe 10 rund ausgeführt und hat eine Tiefe von maximal 1 mm und einen Durchmesser von maximal 2 mm.

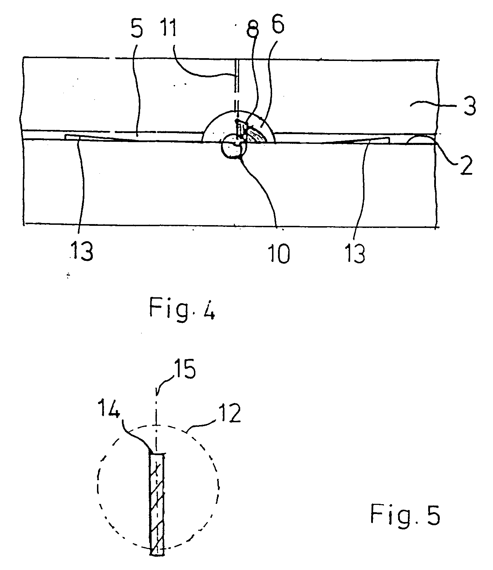

Figur 4 zeigt in schematischer Darstellung zwei auf der Anschlagfläche 2 angeordnete Keile 13, die auf der Anschlagfläche beweglich und in ihrer Stellung arretierbar sind. Dies kann beispielsweise durch in der Anschlagfläche 2 angeordnete Langlöcher und in den Keilen 13 angeordneten Gewindezapfen realisiert werden, die beispielsweise mit einer Flügelmutter unterhalb der Anschlagfläche befestigbar sind. Eine andere Möglichkeit sind auch an der Unterseite der Keile vorgesehene Stifte, die in entsprechende Ausnehmungen in der Anschlagfläche einsteckbar sind. Damit ist jedoch eine kontinuierliche Veränderung der Position der Keile 13 nicht möglich. Grundsätzlich sind hier eine Vielzahl, dem Fachmann geläufige Möglichkeiten denkbar. Durch die Keile liegt der Kleinfräsenvorsatz 1 an wenigstens zwei Punkten an bogenförmig ausgebildeten Werkstückkanten an.

Figur 4 zeigt eine vergrößerte Darstellung ähnlich der Figur 3, wobei die Anschlagfläche 2 gemäß Figur 3 auf eine Stegfläche 18 mit einer Breite von ungefähr 4 bis 10 mm reduziert ist. Die Stegfläche 14 befindet sich symmetrisch zu der in Werkzeug Längsrichtung verlaufenden Schnittebene 15. Mit einem derart ausgebildeten Kleinfräsenvorsatz 1 kann mit der schmalen Stegfläche 14 auch die Rundung von Kanten bei Innenradien des Werkstückes vorgenommen werden, wobei die Anschlagfläche 3 auf der Werkstückoberfläche verbleibt.

Aus Gründen der Stabilität und der Abdeckung des Messers 8 kann der Kleinfräsenvorsatz nicht einen wie in Figur 5 dargestellten rechteckförmigen Querschnitt sondern einen trapezförmigen Querschnitt aufweisen, wobei die Anschlagfläche 14 die Schmalseite der parallelen Seiten des Trapezes bildet.

Die Befestigung des Kleinfräsenvorsatzes an dem Werkzeug kann in geeigneter, dem Fachmann geläufiger Art und Weise erfolgen. Zusätzlich kann ein Schalter zur Drehzahlreduzierung beim Fräsen der Ecke vorgesehen werden, da in diesen Bereich mit vermindertem Vorschub gearbeitet wird.

In dem Ausführungsbeispiel ist der Kleinfräsenvorsatz aus Holz ausgebildet.

## Patentansprüche

1. Kleinfräsenvorsatz zur Abrundung der Kanten und Ecken von Werkstücken, **gekennzeichnet durch** zwei rechtwinklig zueinander und quer zur Fräswerkzeugachse (9) angeordnete Anschlagflächen (2, 3),
eine zu der Ecke (4) zwischen den Anschlagflächen (2, 3) verlaufenden symmetrisch zu den Anschlagflächen angeordnete Vertiefung (5),
eine den Fräskopf (7) aufnehmende Ausnehmung im Bereich der Vertiefung (5), derart, daß das Messer (8) des Fräskopfes (7) in den Bereich der Vertiefung (5) und den in Verlängerung der Anschlagflächen (2, 3) durch die Vertiefung entstandenen Eckbereich gelangt, und
jeweils einen quer zur Anschlagfläche (2, 3) angeordneten Anschlag zum Bearbeiten der Werkstückecke, die miteinander fluchten und mit der Fräswerkzeugachse (9) in einer Ebene liegen.

2. Kleinfräsenvorsatz nach Anspruch 1, **dadurch gekennzeichnet,** daß der Anschlag als quer über die jeweilige Anschlagfläche (2, 3) verlaufende Kerbe (10, 11) ausgebildet ist.

3. Kleinfräsenvorsatz nach Anspruch 2, **dadurch gekennzeichnet,** daß der Boden der Kerbe rechtwinklig ist.

4. Kleinfräsenvorsatz nach Anspruch 2 oder 3, **dadurch gekennzeichnet,** daß die Tiefe der Kerbe maximal 1 mm und die Breite maximal 2 mm beträgt.

5. Kleinfräsenvorsatz nach einem der vorangegangenen Ansprüche, **dadurch gekennzeichnet,** daß der Boden mindestens einer Kerbe höhenverstellbar ist.

6. Kleinfräsenvorsatz nach einem der vorangegangenen Ansprüche, **dadurch gekennzeichnet,** daß die Anschlagflächen (2, 3) aus einem die Werkstückoberfläche schonenden Material besteht.

7. Kleinfräsenvorsatz nach einem der vorangegangenen Ansprüche, **dadurch gekennzeichnet**, daß auf eine Anschlagfläche (2, 3), vorzugsweise auf der Anschlagfläche (2) deren Flächenvektor senkrecht zur Fräswerkzeugachse (9) steht, zwei in der Ebene der Anschlagfläche verschiebbare und in der jeweiligen Positon arretierbare Keile (13) angeordnet sind.

8. Kleinfräsenvorsatz nach einem der vorangegangenen Ansprüche, **dadurch gekennzeichnet**, daß eine Anschlagfläche (2, 3), vorzugsweise die Anschlagfläche (2) deren Flächenvektor senkrecht zur Fräswerkzeugachse (9) steht, als Stegfläche (14) im Bereich der Fräswerkzeugachse (9) ausgebildet ist.

9. Kleinfräsenvorsatz nach Anspruch 8, **dadurch gekennzeichnet**, daß die Stegfläche eine Breite von 4 bis 10 mm aufweist.
